(19) Europäisches Patentamt
European Patent Office
Office européen des brevets

(11) **EP 3 246 427 B1**

(12) **EUROPEAN PATENT SPECIFICATION**

(45) Date of publication and mention
of the grant of the patent:
**12.12.2018 Bulletin 2018/50**

(21) Application number: **16761249.8**

(22) Date of filing: **18.02.2016**

(51) Int Cl.:
*C21D 8/02* *(2006.01)*     *C21D 9/08* *(2006.01)*
*C21D 9/50* *(2006.01)*     *B21C 37/08* *(2006.01)*
*F16L 9/17* *(2006.01)*     *B23K 11/00* *(2006.01)*
*B23K 13/02* *(2006.01)*     *B23K 11/02* *(2006.01)*
*B23K 11/087* *(2006.01)*     *B23K 11/16* *(2006.01)*
*B23K 31/02* *(2006.01)*     *B23K 101/06* *(2006.01)*
*B23K 101/18* *(2006.01)*     *B23K 103/04* *(2006.01)*
*C22C 38/00* *(2006.01)*

(86) International application number:
**PCT/JP2016/000847**

(87) International publication number:
**WO 2016/143270 (15.09.2016 Gazette 2016/37)**

(54) **HIGH STRENGTH ELECTRIC RESISTANCE WELDED STEEL PIPE AND MANUFACTURING METHOD THEREFOR**

HOCHFESTES WIDERSTANDSGESCHWEISSTES STAHLROHR UND HERSTELLUNGSVERFAHREN DAFÜR

TUYAU EN ACIER SOUDÉ PAR RÉSISTANCE ÉLECTRIQUE À HAUTE RÉSISTANCE ET PROCÉDÉ DE FABRICATION S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2015 JP 2015044395**

(43) Date of publication of application:
**22.11.2017 Bulletin 2017/47**

(73) Proprietor: **JFE Steel Corporation**
**Tokyo 100-0011 (JP)**

(72) Inventors:
• **GOTO, Sota**
**Tokyo 100-0011 (JP)**
• **TOYODA, Shunsuke**
**Tokyo 100-0011 (JP)**
• **OKABE, Takatoshi**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 752 499     EP-A1- 2 837 708**
**WO-A1-2013/051238     WO-A1-2013/125400**
**WO-A1-2015/004901     JP-A- 2000 355 735**
**JP-A- 2002 256 389     JP-A- 2005 146 301**
**JP-A- 2008 111 162     JP-A- 2008 111 162**
**JP-A- 2008 280 577     JP-A- 2012 148 305**
**JP-A- 2012 251 200     JP-A- 2013 032 581**
**JP-A- 2014 019 928**

**Description**

Technical Field

The present invention relates to an electric resistance welded steel pipe for line pipes through which petroleum and natural gas are transported. In particular, the present invention relates to a high-strength electric resistance welded steel pipe that is suitable for reel barge laying, has a high strength of Grade X60 (yield strength YS: 415 MPa or more) or more, and has excellent bendability, and a method for producing the high-strength electric resistance welded steel pipe.

Background Art

In recent years, a reel barge method has been often employed as a method for laying offshore pipelines. The reel barge method is a method in which the girth welding, inspection, coating, and the like of a pipe are performed on land in advance and the resulting long pipe is coiled around a reel of a barge, and the pipe is uncoiled from the reel at a target place at sea to lay a pipeline on the sea bottom. By this reel barge method, offshore pipelines can be very efficiently laid. In this reel barge method, however, tensile stress and compressive stress due to bending and unbending are applied to a part of the pipe when the pipe is coiled and laid. Consequently, local rupture and buckling occur in the pipe used, which may cause fracture of the pipe. Therefore, steel pipes for pipelines laid by the reel barge method need to have excellent bendability, that is, high buckling resistance on the compressive side and high rupture resistance on the tensile side during bending deformation. The buckling resistance is highly dependent on the shape uniformity of a pipe. For the rupture resistance, it is important to have high uniform elongation and to prevent ductile fracture.

From the viewpoint of preventing such local rapture and buckling, seamless steel pipes have been mainly used for pipelines laid by the reel barge method.

However, electric resistance welded steel pipes have been used as line pipes from the economical viewpoint in recent years. Electric resistance welded steel pipes have better thickness deviation and circularity than seamless steel pipes. The buckling resistance strongly affected by shape factor is higher than that of seamless steel pipes. However, since electric resistance welded steel pipes are obtained by continuously cold-rolling a hot-rolled steel sheet so as to have a substantially cylindrical shape, a considerable amount of plastic strain is introduced in the pipe axial direction, which deteriorates the uniform elongation in the pipe axial direction. Consequently, the uniform elongation of electric resistance welded steel pipes is normally lower than that of seamless steel pipes. Thus, even low strain easily causes rupture, and the rupture resistance deteriorates compared with seamless steel pipes.

Accordingly, when electric resistance welded steel pipes are used as line pipes laid by the reel barge method, annealing is normally performed after pipe making to improve the uniform elongation, which decreases the efficiency and increases the production cost.

One of methods for improving the uniform elongation of steel materials (steel sheets) is a method that uses a TRIP (transformation induced plasticity) phenomenon of retained austenite by increasing the Si content. To use this phenomenon, the Si content in a steel sheet is generally increased. However, if the Si content in a steel sheet for electric resistance welded steel pipes is increased, a high-melting-point oxide formed during electric resistance welding is left in an electric resistance welded part, which deteriorates the quality of the electric resistance welded part.

Patent Literature 1 proposes a method for producing a high-strength steel pipe having high buckling resistance. In the technique described in Patent Literature 1, a slab having a composition which contains, on a mass% basis, C: 0.02% to 0.15%, Si: 0.1% to 2.0%, Mn: 0.5% to 2.0%, Al: 0.01% to 0.1%, N: 0.01% or less, P: 0.02% or less, S: 0.005% or less, at least one of Nb: 0.1% or less, V: 0.1% or less, and Ti: 0.1% or less, and at least one of Mo: 1.0% or less, Cu: 2.0% or less, Ni: 2.0% or less, and Cr: 1.0% or less and whose Si content is relatively low is heated to 1050°C or higher, then rough-rolled at a temperature higher than or equal to recrystallization temperature, and then finish-rolled at a cumulative reduction of 65% or more at a temperature of $Ar_3$ transformation temperature [°C] or higher and 900°C or lower. The resulting steel sheet is cooled at a cooling rate of 5 °C/s or more from the temperature of $Ar_3$ transformation temperature [°C] or higher, kept at (Ts - 50°C) to (Ts + 100°C) for 30 to 300 seconds, then cooled to 350°C to 450°C at a cooling rate of 20 °C/s or more, and then slowly cooled to obtain a steel sheet containing retained austenite left therein. After the steel sheet is cold-formed so as to have a hollow shape, seam welding is performed to obtain a UOE steel pipe that has a microstructure containing ferrite with an average grain size of 10 $\mu$m or less and an area fraction of 70% to 90%, the balance being retained austenite, bainite, and martensite, and that has a thickness of 10 mm or more and an outside diameter of 100 mm or more, where an amount of the retained austenite measured by X-ray analysis is 5% to 15% in terms of volume fraction. Herein, Ts is represented by formula (1) below.

$$Ts\ [°C] = 780 - 270 \times C - 90 \times Mn - 37 \times Ni - 70 \times Cr - 83 \times Mo \cdots (1)$$

Citation List

Patent Literature

PTL 1: Japanese Patent No. 3749704

Document EP2752499A1 describes a thick wall electric resistance welded steel pipe which has a low enough Y/T so that no buckling occurs due to reeling and unreeling and which is excellent in low temperature toughness, the thick wall electric resistance welded steel pipe wherein the steel pipe has a wall thickness/outside diameter ratio of 4.0 to 7.0%, comprising, by mass%, C: 0.06 to 0.15%, Mn: 1.00 to 1.65%, and Nb: 0.005 to 0.030%, having a Ceq ([C]+[Mn]/6+([Cr]+[Mo]+[V])/5+([Ni]+[Cu])/15) of 0.32 to 0.43, having a metal structure of, by area rate, 50 to 92% of polygonal ferrite, having an average grain size of the polygonal ferrite of 15 $\mu$m or less, having a hardness of a seam part of the electric resistance welding of HV160 to 240, and having a structure of the seam part of fine grain ferrite and pearlite or bainite, where, [C], [Mn], [Cr], [Mo], [V], [Ni], and [Cu] are respectively the contents [mass%] of C, Mn, Cr, Mo, V, Ni, and Cu.

Summary of Invention

Technical Problem

In the technique described in Patent Literature 1, however, the temperature needs to be kept constant in the middle of cooling. In a hot-rolling line in which a steel sheet is cooled while being conveyed in one direction in continuously arranged cooling zones, the length of the facility needs to be considerably increased. In the technique described in Patent Literature 1, the cooling stop temperature is 350°C to 450°C. This increases deformation resistance, which makes it difficult to coil the steel sheet. Furthermore, Patent Literature 1 does not describe an improvement in uniform elongation of a steel pipe.

It is an object of the present invention to provide a high-strength electric resistance welded steel pipe whose uniform elongation in a pipe axial direction is improved without performing heat treatment on the whole pipe and which has excellent bendability, and a method for producing the high-strength electric resistance welded steel pipe, by solving the foregoing problems of prior arts.

The term "high-strength" herein refers to a yield strength YS of 415 MPa or more in a pipe axial direction. The term "excellent bendability" herein particularly relates to rupture resistance and refers to a uniform elongation Elu of 8% or more in a pipe axial direction.

Solution to Problem

To achieve the above object, the present inventors have thoroughly studied various factors that affect the uniform elongation of a hot-rolled steel sheet serving as a pipe material for electric resistance welded steel pipes. As a result, they have become aware of using Cr serving as a ferrite former in order to improve the uniform elongation without performing heat treatment on the whole pipe. They have found that, by combining a composition in which Cr serving as a ferrite former is actively added in a proper amount and adjustment of cooling after hot-rolling within a proper range, a microstructure mainly containing high-temperature transformed polygonal ferrite with a small aspect ratio can be formed, the release of C into non-transformed austenite is facilitated, and a desired amount of retained austenite can be ensured after a coiling step. They have also found that it is effective to increase the contents of elements for improving hardenability, such as Mn and Mo, in addition to Cr. It has been found that, when such a hot-rolled steel sheet is used as a pipe material, an electric resistance welded steel pipe having a high uniform elongation of 8% or more in a pipe axial direction can be produced and the electric resistance welded steel pipe is suitable for reel barge.

The present invention has been completed based on the above findings and further studies. That is, the gist of the present invention is as follows.

(1) A high-strength electric resistance welded steel pipe includes a composition containing, on a mass% basis, C: 0.04% to 0.15%, Si: 0.10% to 0.50%, Mn: 1.0% to 2.2%, P: 0.050% or less, S: 0.005% or less, Cr: 0.2% to 1.0%, Ti: 0.005% to 0.030%, and Al: 0.010% to 0.050%, N: 0.005% or less, O: 0.005% or less, optionally at least one selected from Mo: 0.5% or less, Cu: 0.5% or less, Ni: 1.0% or less, and Co: 1.0% or less, optionally at least one selected from Nb: 0.10% or less and V: 0.10% or less, optionally Ca: 0.0005% to 0.0050%, the balance being Fe and unavoidable impurities, and a microstructure including polygonal ferrite with a volume fraction of 70% or more and retained austenite with a volume fraction of 3% to 20%, the balance being at least one selected from martensite, bainite, and pearlite, wherein the polygonal ferrite has an average grain size of 5 $\mu$m or more and an aspect ratio of 1.40 or less.

(2) In the high-strength electric resistance welded steel pipe according to (1), the composition contains, on a mass% basis, at least one selected from Mo: 0.05% to 0.5%, Cu: 0.05% to 0.5%, Ni: 0.05% to 1.0%, and Co: 0.05% to 1.0%.

(3) In the high-strength electric resistance welded steel pipe according to (1) or (2), the composition contains, on a mass% basis, at least one selected from Nb: 0.01% or more and 0.10% or less and V: 0.01% or more and 0.10% or less.

(4) In the high-strength electric resistance welded steel pipe according to any one of (1) to (3), the composition contains Ca: 0.0005% to 0.0050% on a mass% basis.

(5) A method for producing the high-strength electric resistance welded steel pipe according to any one of (1) to (4) includes a pipe material production step of heating, hot-rolling, and then cooling a steel material to obtain a hot-rolled steel strip and coiling the hot-rolled steel strip; a pipe making step of forming the hot-rolled steel strip into an open pipe having a substantially circular section, then butting end surfaces of the open pipe in a width direction against each other, heating the end surfaces of the open pipe in the width direction to a temperature higher than or equal to the melting point thereof and performing pressure welding on the end surfaces of the open pipe in the width direction to obtain an electric resistance welded steel pipe; and an in-line heat treatment step of heat-treating an electric resistance welded part of the electric resistance welded steel pipe in an in-line manner.

In this method, the heating in the pipe material production step is performed at a heating temperature of 1100°C to 1250°C. The cooling after the hot-rolling in the pipe material production step is continuously performed to a cooling stop temperature of 600°C to 450°C while the cooling is controlled so that, at a central position of the steel strip in a thickness direction, a temperature $T_{20}$ after 20 seconds from a time $t_0$ at which a final pass of the hot-rolling is finished is higher than 650°C and a temperature $T_{80}$ after 80 seconds from the time $t_0$ is lower than 650°C. The heat treatment in the in-line heat treatment step includes heating the electric resistance welded part so that a minimum temperature portion of the electric resistance welded part in a thickness direction has a temperature of 800°C or higher and a maximum heating temperature is 1150°C or lower and then performing water cooling or allowed to cooling on the electric resistance welded part so that a maximum temperature of the electric resistance welded part in a thickness direction is 500°C or lower.

(6) In the method for producing a high-strength electric resistance welded steel pipe according to (5), in the pipe making step, the hot-rolled steel strip is uncoiled and continuously formed using a plurality of rolls to obtain an open pipe having a substantially circular section, then end surfaces of the open pipe in a width direction are butted against each other and heated to a temperature higher than or equal to the melting point thereof and pressure welding is performed on the butted and heated end surfaces of the open pipe in the width direction to obtain an electric resistance welded steel pipe.

Advantageous Effects of Invention

The present invention produces the following industrially marked effect. That is, a high-strength electric resistance welded steel pipe that is suitable for line pipes of offshore pipelines laid by a laying method such as a reel barge method, an S-lay method, or a J-lay method and pipelines laid in tectonic areas such as seismic areas, that has a high strength of Grade X60 or more, and that has excellent bendability can be produced at a lower cost than seamless steel pipes without performing heat treatment on the whole pipe. The present invention also effectively contributes to uses requiring high deformability, such as uses in civil engineering and construction, in addition to line pipes.

Description of Embodiments

An electric resistance welded steel pipe according to the present invention has a composition containing, on a mass% basis, C: 0.04% to 0.15%, Si: 0.10% to 0.50%, Mn: 1.0% to 2.2%, P: 0.050% or less, S: 0.005% or less, Cr: 0.2% to 1.0%, Ti: 0.005% to 0.030%, and Al: 0.010% to 0.050%, N: 0.005% or less, O: 0.005% or less, optionally at least one selected from Mo: 0.5% or less, Cu: 0.5% or less, Ni: 1.0% or less, and Co: 1.0% or less, optionally at least one selected from Nb: 0.10% or less and V: 0.10% or less, optionally Ca: 0.0005% to 0.0050%, the balance being Fe and unavoidable impurities and has a microstructure including polygonal ferrite with a volume fraction of 70% or more and retained austenite with a volume fraction of 3% to 20%, the balance being at least one selected from martensite, bainite, and pearlite, wherein the polygonal ferrite has an average grain size of 5 $\mu$m or more and an aspect ratio of 1.40 or less. The yield strength YS in a pipe axial direction is 415 MPa or more and the uniform elongation Elu in a pipe axial direction is 8% or more.

First, the reasons for limiting the composition of the electric resistance welded steel pipe according to the present invention will be described. Hereafter, "mass%" in the composition is simply expressed as "%".

C: 0.04% to 0.15%

C is an element that contributes to stabilizing an austenite phase. In the present invention, C is an important element for ensuring a desired amount of retained austenite. To produce such an effect, the C content needs to be 0.04% or more. If the C content exceeds 0.15%, the weldability deteriorates. Therefore, the C content is limited to the range of 0.04% to 0.15%. The C content is preferably 0.06% or more and is also preferably 0.12% or less. The C content is more preferably 0.08% to 0.12%.

Si: 0.10% to 0.50%

Si is an element that serves as a deoxidizer and considerably contributes to generation of retained austenite by suppressing the precipitation of cementite. Si also has an effect of decreasing the scale-off quantity during hot-rolling. To produce such effects, the Si content needs to be 0.10% or more. If the Si content exceeds 0.50%, the weldability of electric resistance welding deteriorates. Therefore, the Si content is limited to the range of 0.10% to 0.50%. The Si content is preferably 0.10% to 0.30%.

Mn: 1.0% to 2.2%

Mn is an element that improves the stability of an austenite phase and suppresses the decomposition into pearlite and bainite. To produce such an effect, the Mn content needs to be 1.0% or more. At an excessive Mn content of more than 2.2%, the generation of high-temperature transformed ferrite is suppressed, which prevents the release and concentration of C into non-transformed austenite. Therefore, the Mn content is limited to the range of 1.0% to 2.2%. The Mn content is preferably 1.2% or more and is preferably 1.6% or less.

P: 0.050% or less

P is an element that segregates at grain boundaries and produces an adverse effect such as deterioration of toughness. In the present invention, P is treated as an impurity and the P content is desirably decreased as much as possible. However, a P content of up to 0.050% is allowable. Therefore, the P content is limited to 0.050% or less. The P content is preferably 0.030% or less. An excessive decrease in the P content increases the refining cost, and thus the P content is preferably 0.002% or more.

S: 0.005% or less

S is present in steel as a sulfide-based inclusion (MnS). In particular, MnS is thinly stretched in a hot-rolling process and adversely affects the ductility and toughness. In the present invention, therefore, the S content is desirably decreased as much as possible. However, a S content of up to 0.005% is allowable. Therefore, the S content is limited to 0.005% or less. The S content is preferably 0.003% or less. An excessive decrease in the S content increases the refining cost, and thus the S content is preferably 0.0002% or more.

Cr: 0.2% to 1.0%

In the present invention, Cr is an important element that contributes to generation of retained austenite by suppressing the precipitation of cementite in non-transformed austenite. To produce such an effect, the Cr content needs to be 0.2% or more. At an excessive Cr content of more than 1.0%, the weldability of electric resistance welding deteriorates. Therefore, the Cr content is limited to the range of 0.2% to 1.0%. The Cr content is preferably 0.2% to 0.8% and more preferably 0.2% to 0.5%.

Ti: 0.005% to 0.030%

Ti is an element that fixes N in the form of TiN to suppress deterioration of toughness of steel due to N. Such an effect is produced at a Ti content of 0.005% or more. If the Ti content exceeds 0.030%, the amount of titanium carbonitride that precipitates along the cleaved surface of Fe increases, which deteriorates the toughness of steel. Therefore, the Ti content is limited to the range of 0.005% to 0.030%. The Ti content is preferably 0.005% to 0.025%.

Al: 0.010% to 0.050%

Al is an element that serves as a strong deoxidizer and considerably contributes to generation of retained austenite by suppressing the precipitation of cementite. To produce such effects, the Al content needs to be 0.010% or more. If the Al content exceeds 0.050%, an Al-based oxide is easily left in steel, which deteriorates the cleanliness of the steel. Therefore, the Al content is limited to the range of 0.010% to 0.050%. The Al content is preferably 0.010% to 0.045%.

The balance other than the above-described components is Fe and unavoidable impurities. Herein, N: 0.005% or less and O (oxygen): 0.005% or less are allowable as unavoidable impurities.

In the present invention, the above-described basic composition may further optionally contain at least one selected from Mo: 0.5% or less, Cu: 0.5% or less, Ni: 1.0% or less, and Co: 1.0% or less, at least one selected from Nb: 0.10% or less and V: 0.10% or less, and/or Ca: 0.0005% to 0.0050%.

At least one selected from Mo: 0.5% or less, Cu: 0.5% or less, Ni: 1.0% or less, and Co: 1.0% or less

All of Mo, Cu, Ni, and Co are elements that improve the stability of an austenite phase and contribute to generation of retained austenite. To produce such an effect, Mo: 0.05% or more, Cu: 0.05% or more, Ni: 0.05% or more, and Co: 0.05% or more are desirably satisfied. If the contents exceed Mo: 0.5%, Cu: 0.5%, Ni: 1.0%, and Co: 1.0%, the above effect is saturated and the weldability deteriorates. Therefore, if these elements are contained, the contents are preferably limited to the ranges of Mo: 0.5% or less, Cu: 0.5% or less, Ni: 1.0% or less, and Co: 1.0% or less and more preferably limited to the ranges of Mo: 0.4% or less, Cu: 0.4% or less, Ni: 0.4% or less, and Co: 0.4% or less.

At least one of Nb: 0.10% or less and V: 0.10% or less

Both of Nb and V are elements that form a carbonitride or a carbide and contribute to an improvement in the strength of a hot-rolled steel strip through precipitation strengthening. To produce such an effect, the contents are desirably Nb: 0.01% or more and V: 0.01% or more. If the contents exceed Nb: 0.10% and V: 0.10%, a coarse precipitate is formed, which deteriorates the toughness of a base material or deteriorates the weldability. Therefore, if these elements are contained, the contents are limited to the ranges of Nb: 0.10% or less and V: 0.10% or less.

Ca: 0.0005% to 0.0050%

Ca is an element that contributes to effectively controlling the form of sulfide-based inclusions. Ca makes a sulfide such as MnS harmless and improves the toughness of a hot-rolled steel strip. To produce such an effect, the Ca content needs to be 0.0005% or more. If the Ca content exceeds 0.0050%, a Ca-based oxide cluster is formed, which deteriorates the toughness of a hot-rolled steel strip. Therefore, if Ca is contained, the Ca content is preferably limited to the range of 0.0005% to 0.0050%. The Ca content is more preferably 0.0010% or more and 0.0040% or less.

Next, the reasons for limiting the microstructure of the electric resistance welded steel pipe of the present invention will be described.

The electric resistance welded steel pipe of the present invention has the above composition and also has a microstructure including polygonal ferrite (with a volume fraction of 70% or more) as a main microstructure and retained austenite with a volume fraction of 3% to 20%, the balance being at least one selected from martensite, bainite, and pearlite. The polygonal ferrite has an average grain size of 5 $\mu$m or more and an aspect ratio of 1.40 or less.

Polygonal ferrite: 70% or more in terms of volume fraction

The term "polygonal ferrite" herein refers to high-temperature transformed ferrite, which is transformed with diffusion. In the high-temperature transformed ferrite, C is released into non-transformed austenite when the transformation proceeds. Thus, the non-transformed austenite is stabilized, which makes it easy to generate a desired amount of retained austenite. Therefore, in the present invention that provides a high-strength hot-rolled steel strip having excellent uniform elongation by using a TRIP phenomenon of retained austenite, such polygonal ferrite is a main microstructure. Herein, the term "main microstructure" in the present invention refers to a microstructure having a volume fraction of 70% or more.

If the main microstructure is bainitic ferrite or bainite, the amount of C released during transformation is small or almost zero, resulting in insufficient concentration of C into the non-transformed austenite. Consequently, the non-transformed austenite is not stabilized and is transformed into pearlite or bainite after cooling, which makes it difficult to form a retained austenite phase with a volume fraction of 3% to 20%. Therefore, the main microstructure is polygonal ferrite.

To avoid the ambiguity when the microstructure is distinguished, the term "polygonal ferrite" is defined as a microstructure having an aspect ratio of 1.40 or less, which is determined by (crystal grain diameter in rolling direction)/(crystal grain diameter in sheet thickness direction), and an average grain size of 5 $\mu$m or more in the present invention.

Retained austenite: 3% to 20% in terms of volume fraction

Retained austenite contributes to an improvement in the uniform elongation of an electric resistance welded steel pipe through stress-induced transformation (TRIP phenomenon). To produce such an effect, the retained austenite phase needs to have a volume fraction of 3% or more. At an excessive volume fraction of more than 20%, the concentration of carbon contained in the retained austenite decreases and the retained austenite becomes unstable against deformation, resulting in deterioration of uniform elongation. Therefore, the volume fraction of the retained austenite is limited to the range of 3% to 20%. The volume fraction of the retained austenite is preferably 3% to 15% and more preferably 5% to 15%.

Balance: at least one selected from martensite, bainite, and pearlite

The balance other than the polygonal ferrite serving as a main microstructure and the retained austenite is preferably at least one selected from martensite, bainite, and pearlite with a volume fraction of 10% or less (including 0%). If the volume fraction in total of the balance, that is, at least one selected from martensite, bainite, and pearlite exceeds 10%, the strength excessively increases and the uniform elongation deteriorates. Note that ferrite other than polygonal ferrite is classified as bainite.

When an electric resistance welded steel pipe has the above composition and microstructure, a yield ratio (YR) in the pipe axial direction of 93% or less can be achieved at a size of (pipe thickness/pipe outside diameter) $\times$ 100 = 2.5% to 7.0%.

The above-described microstructure including polygonal ferrite with a volume fraction of 70% or more and retained austenite with a volume fraction of 3% to 20%, the balance being at least one selected from martensite, bainite, and pearlite, is measured as follows. First, a test specimen for observing a microstructure is sampled from an electric resistance welded steel pipe so that a section in the rolling direction (L section) serves as an observation surface. The sampled test specimen for observing a microstructure is polished and etched (etchant: nital). A microstructure at a position of 1/2t of the sheet thickness is observed with an optical microscope (magnification: 400 times) and a scanning electron microscope SEM (magnification: 2000 times), and two or more view areas are photographed in each of the specimens. From the obtained photographs of the microstructures, the type of microstructure, the area fraction of each phase, and the aspect ratio of crystal grains of the polygonal ferrite are determined using an image analyzer. Furthermore, the average grain size of the polygonal ferrite can be determined by a cutting method in conformity with JIS G 0551. In the measurement of the microstructure, the calculation is performed using an arithmetic mean. Furthermore, an area fraction is determined for retained austenite by a SEM/EBSD (electron backscatter diffraction) method. On the assumption that the microstructure is three-dimensionally homogeneous, the determined area fraction is defined as a volume fraction.

Next, a method for producing an electric resistance welded steel pipe of the present invention will be described.

A pipe material production step of heating, hot-rolling, and then cooling a steel material having the above composition to obtain a hot-rolled steel strip and coiling the hot-rolled steel strip is performed.

In the pipe material production step, a steel material having the above composition is heated at a heating temperature of 1100°C to 1250°C and then hot-rolled to obtain a hot-rolled steel strip serving as a pipe material.

Heating temperature of steel material: 1100°C to 1250°C

If the heating temperature of the steel material is lower than 1100°C, coarse carbonitrides and segregation zones generated in a casting step cannot be eliminated. Consequently, the ductility and toughness of a hot-rolled steel sheet deteriorate, and furthermore the strength deteriorates. If the steel material is heated at higher than 1250°C, crystal grains tend to coarsen, which may deteriorate the ductility and toughness of a hot-rolled steel sheet. Furthermore, the specific energy consumption increases, resulting in low cost-effectiveness. The heating temperature refers to a setting temperature in a heating furnace.

The heated steel material is hot-rolled to obtain a hot-rolled steel strip having a predetermined size and shape. The hot-rolling conditions are not particularly limited as long as the hot-rolled steel strip has a predetermined size and shape. However, in consideration of the cooling performed next, the temperature after the final pass of the hot-rolling, that is, the finish rolling end temperature is preferably set to 750°C or higher.

The cooling after the hot-rolling is continuously performed on the hot-rolled steel strip to a cooling stop temperature of 600°C to 450°C while the cooling is controlled so that, at a central position of the steel strip in a thickness direction, the temperature $T_{20}$ after 20 seconds from the time $t_0$ at which a final pass of the hot-rolling is finished is higher than 650°C and the temperature $T_{80}$ after 80 seconds from the time $t_0$ is lower than 650°C. The "cooling" in the present invention is preferably performed by spraying cooling water onto upper and lower surfaces of the hot-rolled steel strip from a water cooling zone continuously arranged in a run-out table disposed on the delivery side of the finish rolling mill. The arrangement intervals, water flow rate, and the like in the water cooling zone are not particularly limited. The temperature at the central position of the hot-rolled steel strip in a thickness direction is a temperature determined by heat transfer analysis on the basis of the temperature measured with a surface thermometer.

Cooling after hot-rolling: at a central position of the steel strip in a thickness direction, the temperature $T_{20}$ after 20 seconds from the time $t_0$ at which a final pass of the hot-rolling is finished is higher than 650°C and the temperature $T_{80}$ after 80 seconds from the time $t_0$ is lower than 650°C

When the composition is within the range of the hot-rolled steel strip according to the present invention, polygonal ferrite transformation is caused by controlling the cooling so that, at a central position of the steel strip in a thickness direction, the temperature $T_{20}$ after 20 seconds from the time $t_0$ at which a final pass of the hot-rolling is finished is higher than 650°C and the temperature $T_{80}$ after 80 seconds from the time $t_0$ is lower than 650°C. Thus, the steel strip microstructure can be controlled to a microstructure mainly containing polygonal ferrite.

More specifically, when the temperature at a central position of the steel strip in a thickness direction is 750°C to 650°C at 20 seconds or more and less than 80 seconds from the time $t_0$ at which a final pass of the hot-rolling is finished (upon finishing the finish rolling), polygonal ferrite transformation is caused. Thus, the steel strip microstructure can be controlled to a microstructure mainly containing polygonal ferrite.

If the cooling is performed so that the temperature $T_{20}$ at a central position of the steel strip in a thickness direction is 650°C or lower, bainitic ferrite or bainite is mainly generated, and thus a microstructure mainly containing polygonal ferrite cannot be provided. If the temperature $T_{80}$ at a central position of the steel strip in a thickness direction is 650°C or higher, precipitation of carbonitride and cementite readily occurs together with ferrite transformation, which makes it difficult to cause the concentration of C into non-transformed austenite.

Accordingly, in the present invention, the cooling after the hot-rolling is controlled so that, at a central position of the steel strip in a thickness direction, the temperature $T_{20}$ after 20 seconds from the time $t_0$ at which a final pass of the hot-rolling is finished is higher than 650°C and the temperature $T_{80}$ after 80 seconds from the time $t_0$ is lower than 650°C.

Cooling stop temperature: 600°C to 450°C

If the cooling stop temperature is higher than 600°C, the non-transformed austenite is transformed into pearlite or bainite after coiling, and thus a desired amount of retained austenite cannot be provided. If the cooling stop temperature is lower than 450°C, a part of the non-transformed austenite is transformed into martensite, and thus a desired amount of retained austenite cannot be provided. Therefore, the cooling stop temperature of the cooling after the hot-rolling is limited to the range of 600°C to 450°C.

Accordingly, in the present invention, the cooling after the hot-rolling is limited to a cooling treatment in which the cooling is controlled so that, at a central position of the steel strip in a thickness direction, the temperature $T_{20}$ after 20 seconds from the time $t_0$ at which a final pass of the hot-rolling is finished is higher than 650°C and the temperature $T_{80}$ after 80 seconds from the time $t_0$ is lower than 650°C, and the cooling is continuously performed to a cooling stop temperature of 600°C to 450°C.

Subsequently, the resulting coiled hot-rolled steel strip is used as a pipe material and a pipe making step is performed. In the pipe making step, the coiled hot-rolled steel strip serving as a pipe material is uncoiled and continuously cold-formed by using a plurality of rolls to obtain an open pipe having a substantially circular cross section. Then, end surfaces of the open pipe in a width direction are butted against each other and heated to a temperature higher than or equal to the melting point thereof by high-frequency induction heating or high-frequency resistance heating, and pressure welding is performed on the butted and heated end surfaces of the open pipe in the width direction with a squeeze roll. Thus, an electric resistance welded steel pipe is obtained. The pipe making step in the present invention is not particularly limited as long as an electric resistance welded steel pipe having a desired size and shape can be produced through the pipe making step. Any typical pipe making step that uses a general facility for producing an electric resistance welded steel pipe can be employed.

The electric resistance welded steel pipe produced in the pipe making step is then subjected to an in-line heat treatment step in which an electric resistance welded part is heat-treated in an in-line manner.

When a hot-rolled steel strip having a composition within the range of the present invention is subjected to electric resistance welding, the resulting electric resistance welded part has a microstructure mainly containing martensite and/or upper bainite because of rapid heating and rapid cooling during the welding. These microstructures are microstructures having low toughness. In the present invention, such a microstructure is modified into a microstructure having high toughness by performing an in-line heat treatment step. The "high toughness" herein is expressed when the Charpy impact test absorbed energy $vE_0$ (J) in a circumferential direction is 150 J or more at a test temperature of 0°C.

To perform heat treatment in an in-line manner, a series of common apparatuses are preferably used that include one or more induction heating apparatuses and cooling apparatuses that use water cooling or the like, which are capable of heating and cooling the electric resistance welded part, sequentially arranged in an in-line manner on the downstream side of a squeeze roll in a facility for producing electric resistance welded steel pipes.

The in-line heat treatment includes heating the electric resistance welded part so that the minimum temperature portion of the electric resistance welded part in a thickness direction has a temperature of 800°C or higher and the maximum heating temperature is 1150°C or lower and then performing water cooling or allowed to cooling on the electric resistance welded part so that the maximum temperature of the electric resistance welded part in a thickness direction is 500°C or lower. Herein, the term "in-line" refers to an arrangement in a straight line. The term "in-line heat treatment" refers to, for example, a heat treatment that uses heating apparatuses arranged in a straight line along the welded part. The heating apparatuses are not particularly limited and, for example, direct electrifying heating can be employed instead of induction heating.

Heating temperature in in-line heat treatment: 800°C to 1150°C

If the heating temperature in the minimum temperature portion is lower than 800°C, the microstructure in the electric resistance welded part cannot be controlled to bainitic ferrite and/or bainite having high toughness in the entire region in the sheet thickness direction. If the heating temperature in the maximum heating portion is higher than 1150°C, austenite grains markedly coarsen and the hardenability increases, resulting in formation of martensite after cooling. Therefore, the heating temperature of the electric resistance welded part in the in-line heat treatment is limited to the range of 800°C to 1150°C between the minimum temperature portion and the maximum temperature portion. The heating temperature is preferably 850°C to 1100°C. The cooling after the heating may be performed by allowed to cooling or water cooling in accordance with the required strength and toughness, but water cooling is preferably employed to achieve both strength and toughness. After water cooling, an in-line tempering treatment may be optionally performed at a heating temperature (tempering temperature) of 400°C to 700°C. The in-line tempering treatment is preferably performed using a series of induction heating apparatuses and the like arranged on the downstream side of the in-line heat treatment apparatus. The in-line heat treatment time is preferably 5 seconds or more at 800°C or higher.

Hereafter, the present invention will be further described based on Examples.

EXAMPLES

A molten steel having a composition listed in Table 1 was refined with a converter, and slab (steel material: thickness 220 mm) was obtained by a continuous casting method. The slab (steel material) was subjected to a pipe material production step under the conditions listed in Table 2 to obtain a hot-rolled steel strip having a sheet thickness listed in Table 2. The hot-rolled steel strip was coiled to obtain a pipe material. Subsequently, the coiled hot-rolled steel strip serving as a pipe material was uncoiled and continuously cold-formed using a plurality of rolls to obtain an open pipe having a substantially circular section. Then, facing end surfaces of the open pipe in a width direction were butted against each other and heated to a temperature higher than or equal to the melting point thereof using a high-frequency induction heating apparatus, and pressure welding was performed on the butted and heated facing end surfaces of the open pipe in the width direction with a squeeze roll. Thus, an electric resistance welded steel pipe having a size (thickness/outside diameter) listed in Table 2 was obtained. Subsequently, the electric resistance welded part of the obtained electric resistance welded steel pipe was subjected to an in-line heat treatment in which heating was performed to a surface temperature of 1050°C using an induction heating apparatus disposed in an in-line manner on the downstream side of the squeeze roll in the facility for producing electric resistance welded steel pipes, and allowed to cooling was performed so that the maximum temperature in a thickness direction was 500°C or lower. It was also confirmed that the temperature in the minimum temperature portion was 850°C or higher. Herein, the average cooling rate of the pipe outer surface in the electric resistance welded part was about 2 °C/s.

A test specimen was sampled from the obtained electric resistance welded steel pipe, and microstructure observation, a tensile test, and an impact test were conducted. The test methods are as follows.

(1) Microstructure observation

A test specimen for observing a microstructure was sampled from the obtained electric resistance welded steel pipe so that a section in the rolling direction (L section) served as an observation surface. The sampled test specimen for observing a microstructure was polished and etched (etchant: nital). A microstructure at a position of 1/2t of the sheet thickness was observed with an optical microscope (magnification: 400 times) and a scanning electron microscope SEM (magnification: 2000 times), and two or more view area were photographed in each of the specimens. From the obtained photographs of the microstructures, the type of microstructure, the area fraction of each phase, and the aspect ratio of crystal grains of the main phase were determined using an image analyzer. Furthermore, the average grain size of the main phase was determined by a cutting method in conformity with JIS G 0551. The arithmetic mean of the obtained values was used as a value of the steel pipe. Furthermore, an area fraction was determined for retained austenite by a SEM/EBSD (electron backscatter diffraction) method because it was difficult to visually distinguish retained austenite. On the assumption that the microstructure was three-dimensionally homogeneous, the determined area fraction was defined as a volume fraction.

(2) Tensile test

A tensile test specimen was sampled from the obtained electric resistance welded steel pipe at a 90° clockwise position in a circumferential direction from the electric resistance welded part when viewed from the leading end of the pipe. The tensile test specimen was sampled in conformity with ASTM A 370 so that the tensile direction was a pipe axial direction. A tensile test was conducted to determine tensile characteristics (yield strength YS, tensile strength TS, and uniform elongation Elu).

(3) Impact test

A V-notch test specimen was sampled from the electric resistance welded part of the obtained electric resistance welded steel pipe at a position of 1/2 the thickness so that the circumferential direction was a longitudinal direction of the test specimen. A Charpy impact test was conducted in conformity with ASTM A 370 to determine a Charpy impact test absorbed energy $vE_0$ (J) at a test temperature of 0°C. Three test specimens were used for the test, and the arithmetic mean of the values was defined as an absorbed energy of the steel pipe.
Table 3 shows the results.

[Table 1]

| Steel No. | Composition (mass%) | | | | | | | | | | | Remarks |
|---|---|---|---|---|---|---|---|---|---|---|---|---|
| | C | Si | Mn | P | S | Cr | Ti | Al | Mo,Cu,Ni,Co | Nb,V | Ca | |
| A | 0.13 | 0.15 | 1.4 | 0.014 | 0.003 | 0.33 | 0.014 | 0.033 | - | - | - | Example |
| B | 0.06 | 0.30 | 1.8 | 0.015 | 0.002 | 0.80 | 0.011 | 0.035 | - | - | 0.0025 | Example |
| C | 0.05 | 0.25 | 1.5 | 0.013 | 0.003 | 0.30 | 0.009 | 0.030 | Mo:0.4 | V:0.02 | - | Example |
| D | 0.10 | 0.20 | 1.1 | 0.020 | 0.002 | 0.60 | 0.010 | 0.035 | Co:0.5 | - | - | Example |
| E | 0.08 | 0.25 | 1.6 | 0.010 | 0.001 | 0.48 | 0.025 | 0.025 | Mo:0.1 | Nb:0.02 | - | Example |
| F | 0.14 | 0.30 | 1.2 | 0.015 | 0.002 | 0.25 | 0.008 | 0.030 | Cu:0.3, Ni:0.3 | Nb:0.06, V:0.06 | - | Example |
| G | 0.11 | 0.30 | 1.4 | 0.020 | 0.002 | 0.40 | 0.011 | 0.035 | - | Nb:0.03 | - | Example |
| H | 0.06 | 0.35 | 2.1 | 0.020 | 0.003 | 0.28 | 0.022 | 0.035 | Ni:0.6 | - | - | Example |
| I | 0.09 | 0.15 | 1.2 | 0.013 | 0.002 | 0.45 | 0.015 | 0.033 | Mo:0.1, Co:0.3 | Nb:0.04, V:0.03 | - | Example |
| J | 0.12 | 0.15 | 1.7 | 0.030 | 0.002 | <u>0.10</u> | 0.013 | 0.038 | - | Nb0.05 | - | Comparative Example |

• The balance other than the above components is Fe and unavoidable impurities.

EP 3 246 427 B1

[Table 2]

| Steel pipe No. | Steel No. | Pipe material production step | | | | | | | Pipe making step | | In-line heat treatment step | Remarks |
|---|---|---|---|---|---|---|---|---|---|---|---|---|
| | | Heating temperature (°C) | Finish rolling end temperature (°C) | Cooling | | | | Sheet thickness (mm) | Pipe size (outside diameter φmm × thickness mm) | thickness/Outside diameter (%) | Heating temperature**** (°C) | |
| | | | | $T_{20}$* (°C) | $T_{80}$** (°C) | Cooling stop temperature (°C) | Conformity *** | | | | | |
| 1 | A | 1180 | 820 | 740 | 600 | 550 | Yes | 15.9 | 406φ × 15.9 | 3.9 | 1050 | Invention Example |
| 2 | B | 1180 | 820 | 720 | 620 | 540 | Yes | 15.9 | 457φ × 15.9 | 3.5 | 1050 | Invention Example |
| 3 | C | 1180 | 810 | 710 | 610 | 540 | Yes | 15.9 | 305φ × 15.9 | 5.2 | 1050 | Invention Example |
| 4 | D | 1200 | 830 | 750 | 580 | 540 | Yes | 12.7 | 356φ × 12.7 | 3.6 | 1050 | Invention Example |
| 5 | E | 1200 | 810 | 730 | 610 | 520 | Yes | 17.5 | 406φ × 17.5 | 4.3 | 1050 | Invention Example |
| 6 | F | 1150 | 820 | 740 | 620 | 550 | Yes | 15.9 | 406φ × 15.9 | 3.9 | 1050 | Invention Example |
| 7 | G | 1230 | 820 | 720 | 620 | 550 | Yes | 20.6 | 406φ × 20.6 | 5.1 | 1050 | Invention Example |
| 8 | H | 1180 | 790 | 710 | 590 | 560 | Yes | 20.6 | 406φ × 20.6 | 5.1 | 1050 | Invention Example |
| 9 | I | 1180 | 780 | 680 | 580 | 560 | Yes | 17.5 | 305φ × 17.5 | 5.7 | 1050 | Invention Example |
| 10 | A | 1200 | 800 | 770 | <u>720</u> | 590 | Yes | 11.0 | 305φ × 11.0 | 3.6 | 1050 | Comparative Example |
| 11 | B | 1180 | 760 | 740 | <u>670</u> | 550 | Yes | 14.3 | 406φ × 14.3 | 3.5 | 1050 | Comparative Example |
| 12 | C | 1180 | 780 | <u>490</u> | 490 | 500 | No | 25.4 | 508φ × 25.4 | 5.0 | 1050 | Comparative Example |

(continued)

| Steel pipe No. | Steel No. | Pipe material production step | | | | | | | Sheet thickness (mm) | Pipe making step | | In-line heat treatment step | Remarks |
|---|---|---|---|---|---|---|---|---|---|---|---|---|---|
| | | Heating temperature (°C) | Finish rolling end temperature (°C) | Cooling | | | | | | Pipe size (outside diameter $\phi$mm $\times$ thickness mm) | thickness/ Outside diameter (%) | Heating temperature**** (°C) | |
| | | | | $T_{20}$* (°C) | $T_{80}$** (°C) | Cooling stop temperature (°C) | Conformity *** | | | | | | |
| 13 | E | 1230 | 790 | <u>590</u> | 540 | 550 | Yes | 16.8 | | 508$\phi$ $\times$ 16.8 | 3.3 | 1050 | Comparative Example |
| 14 | G | 1220 | 840 | 760 | 620 | <u>630</u> | Yes | 15.9 | | 406$\phi$ $\times$ 15.9 | 3.9 | 1050 | Comparative Example |
| 15 | I | 1220 | 820 | <u>320</u> | 610 | <u>350</u> | No | 21.5 | | 457$\phi$ $\times$ 21.5 | 4.7 | 1050 | Comparative Example |
| 16 | J | 1210 | 790 | 710 | 590 | 530 | Yes | 23.5 | | 508$\phi$ $\times$ 23.5 | 4.6 | 1050 | Comparative Example |

*) Temperature $T_{20}$ after 20 seconds from time $t_0$ (upon finishing the finish rolling) at which the final pass of the hot-rolling is finished

**) Temperature $T_{80}$ after 80 seconds from time $t_0$ (upon finishing the finish rolling) at which the final pass of the hot-rolling is finished ***) Conformity Yes: Temperature at a central position of the hot-rolled steel strip in a thickness direction is within the range of 750°C to 650° at 20 seconds or more and less than 80 seconds from the time to (upon finishing the finish rolling). No: Temperature at a central position of the hot-rolled steel strip in a thickness direction is outside the range of 750°C to 650° at 20 seconds or more and less than 80 seconds from the time to (upon finishing the finish rolling).

****) Outer surface temperature of pipe

[Table 3]

| Steel pipe No. | Steel No. | Type* | Microstructure | | | | Tensile characteristics of base material portion | | | Toughness of electric resistance welded part | Remarks |
|---|---|---|---|---|---|---|---|---|---|---|---|
| | | | Microstructure fraction (volume fraction (%)) | | Average grain size** (μm) | Aspect ratio** | Yield strength YS (MPa) | Tensile strength TS (MPa) | Uniform elongation Elu (%) | vE$_0$ (J) | |
| | | | Main Phase | A* | | | | | | | |
| 1 | A | PF+A+M | PF:85 | 10 | 7 | 1.1 | 552 | 635 | 13 | 218 | Invention Example |
| 2 | B | PF+A+M | PF:90 | 6 | 8 | 1.1 | 477 | 575 | 14.9 | 241 | Invention Example |
| 3 | C | PF+A+M | PF:90 | 8 | 8 | 1.2 | 606 | 670 | 10.9 | 275 | Invention Example |
| 4 | D | PF+A+M | PF:83 | 16 | 5 | 1.3 | 581 | 683 | 15.1 | 277 | Invention Example |
| 5 | E | PF+A+M | PF:85 | 13 | 6 | 1.1 | 570 | 641 | 15.2 | 281 | Invention Example |
| 6 | F | PF+A+M+B | PF:86 | 11 | 9 | 1.1 | 588 | 700 | 14.8 | 257 | Invention Example |
| 7 | G | PF+A+M | PF:85 | 13 | 7 | 1.2 | 583 | 670 | 12.8 | 183 | Invention Example |
| 8 | H | PF+A+M | PF:82 | 16 | 6 | 1.2 | 639 | 710 | 9.6 | 225 | Invention Example |
| 9 | I | PF+A+M+B | PF:80 | 14 | 6 | 1.2 | 602 | 654 | 11.3 | 240 | Invention Example |
| 10 | A | PF+P+B+A | PF:87 | 0.5 | 10 | 1.1 | 523 | 575 | 6.8 | 212 | Comparative Example |
| 11 | B | PF+P+M | PF:88 | - | 9 | 1.1 | 578 | 628 | 5.9 | 214 | Comparative Example |
| 12 | C | BF+B | BF:96 | - | 4 | 1.5 | 641 | 668 | 5.6 | 199 | Comparative Example |

(continued)

| Steel pipe No. | Steel No. | Microstructure | | | | | Tensile characteristics of base material portion | | | Toughness of electric resistance welded part | Remarks |
|---|---|---|---|---|---|---|---|---|---|---|---|
| | | Type* | Microstructure fraction (volume fraction (%)) | | Average grain size** ($\mu$m) | Aspect ratio** | Yield strength YS (MPa) | Tensile strength TS (MPa) | Uniform elongation Elu (%) | $vE_0$ (J) | |
| | | | Main Phase | A* | | | | | | | |
| 13 | E | B+M | B:80 | - | 4 | 1.5 | 596 | 677 | 6.1 | 219 | Comparative Example |
| 14 | G | PF+P+B | PF:86 | - | 7 | 1.2 | 586 | 640 | 7.2 | 256 | Comparative Example |
| 15 | I | PF+M | PF:94 | - | 6 | 1.2 | 763 | 603 | 7.3 | 226 | Comparative Example |
| 16 | J | PF+A+B+P | PF:88 | 0.5 | 6 | 1.1 | 541 | 595 | 6.5 | 196 | Comparative Example |

*) PF: polygonal ferrite phase, BF: bainitic ferrite phase, A: retained austenite, M: martensite phase, B: bainite phase, P: pearlite
**) Average grain size and aspect ratio of main phase

In all Invention Examples, a high-strength electric resistance welded steel pipe is provided that includes a base material portion having high strength with a yield strength YS in a pipe axial direction of 415 MPa or more and "excellent bendability" with a uniform elongation Elu in a pipe axial direction of 8% or more, and an electric resistance welded part having excellent toughness with a Charpy impact test absorbed energy $vE_0$ of 150 J or more at 0°C. In contrast, in Comparative Examples that are outside the scope of the present invention, the uniform elongation Elu in a pipe axial direction is less than 8% and the bendability deteriorates.

**Claims**

1.  A high-strength electric resistance welded steel pipe comprising:

    a composition containing, on a mass% basis, C: 0.04% to 0.15%, Si: 0.10% to 0.50%, Mn: 1.0% to 2.2%, P: 0.050% or less, S: 0.005% or less, Cr: 0.2% to 1.0%, Ti: 0.005% to 0.030%, and Al: 0.010% to 0.050%, N: 0.005% or less, O: 0.005% or less, optionally at least one selected from Mo: 0.5% or less, Cu: 0.5% or less, Ni: 1.0% or less, and Co: 1.0% or less, optionally at least one selected from Nb: 0.10% or less and V: 0.10% or less, optionally Ca: 0.0005% to 0.0050%, the balance being Fe and unavoidable impurities; and
    a microstructure including polygonal ferrite with a volume fraction of 70% or more and retained austenite with a volume fraction of 3% to 20%, the balance being at least one selected from martensite, bainite, and pearlite, wherein the polygonal ferrite has an average grain size of 5 $\mu$m or more and an aspect ratio of 1.40 or less.

2.  The high-strength electric resistance welded steel pipe according to Claim 1, wherein the composition contains, on a mass% basis, at least one selected from Mo: 0.05% to 0.5%, Cu: 0.05% to 0.5%, Ni: 0.05% to 1.0% , and Co: 0.05% to 1.0%.

3.  The high-strength electric resistance welded steel pipe according to Claim 1 or 2, wherein the composition contains, on a mass% basis, at least one selected from Nb: 0.01% or more and 0.10% or less and V: 0.01% or more and 0.10% or less.

4.  The high-strength electric resistance welded steel pipe according to any one of Claims 1 to 3, wherein the composition contains Ca: 0.0005% to 0.0050% on a mass% basis.

5.  A method for producing the high-strength electric resistance welded steel pipe according to any one of Claims 1 to 4, the method comprising
    a pipe material production step of heating, hot-rolling, and then cooling a steel material to obtain a hot-rolled steel strip and coiling the hot-rolled steel strip;
    a pipe making step of forming the hot-rolled steel strip into an open pipe having a substantially circular section, then butting end surfaces of the open pipe in a width direction against each other, heating the end surfaces of the open pipe in the width direction to a temperature higher than or equal to the melting point thereof and performing pressure welding on the butted and heated end surfaces of the open pipe in the width direction to obtain an electric resistance welded steel pipe; and
    an in-line heat treatment step of heat-treating an electric resistance welded part of the electric resistance welded steel pipe in an in-line manner,
    wherein the heating in the pipe material production step is performed at a heating temperature of 1100°C to 1250°C, the cooling after the hot-rolling in the pipe material production step is continuously performed to a cooling stop temperature of 600°C to 450°C while the cooling is controlled so that, at a central position of the steel strip in a thickness direction, a temperature $T_{20}$ after 20 seconds from a time $t_0$ at which a final pass of the hot-rolling is finished is higher than 650°C and a temperature $T_{80}$ after 80 seconds from the time $t_0$ is lower than 650°C, and the heat treatment in the in-line heat treatment step includes heating the electric resistance welded part so that a minimum temperature portion of the electric resistance welded part in a thickness direction has a temperature of 800°C or higher and a maximum heating temperature is 1150°C or lower and then performing water cooling or allowed to cooling on the electric resistance welded part so that a maximum temperature of the electric resistance welded part in a thickness direction is 500°C or lower.

6.  The method for producing a high-strength electric resistance welded steel pipe according to Claim 5, wherein in the pipe making step, the hot-rolled steel strip is uncoiled and continuously formed using a plurality of rolls to obtain an open pipe having a substantially circular section, then end surfaces of the open pipe in a width direction are butted against each other and heated to a temperature higher than or equal to the melting point thereof, and pressure welding is performed on the butted and welded end surfaces of the open pipe in the width direction to obtain an electric resistance welded steel pipe.

**Patentansprüche**

1. Hochfestes, elektrisch widerstandsgeschweißtes Stahlrohr, umfassend:

   eine Zusammensetzung, die, auf einer Massen%-Basis, C: 0,04% bis 0,15%, Si: 0,10% bis 0,50%, Mn: 1,0% bis 2,2%, P: 0,050% oder weniger, S: 0,005% oder weniger, Cr: 0,2% bis 1,0%, Ti: 0,005% bis 0,030% und Al: 0,010% bis 0,050%, N: 0,005% oder weniger, O: 0,005% oder weniger, optional zumindest eines ausgewählt aus Mo: 0,5% oder weniger, Cu: 0,5% oder weniger, Ni: 1,0% oder weniger und Co: 1,0% oder weniger, optional zumindest eines ausgewählt aus Nb: 0,10% oder weniger und V: 0,10% oder weniger und optional Ca: 0,0005% bis 0,0050% beinhaltet, wobei der Rest aus Fe und unvermeidbaren Verunreinigungen besteht; und
   ein Gefüge, das polygonales Ferrit mit einem Volumenanteil von 70% oder mehr und Restaustenit mit einem Volumenanteil von 3% bis 20% beinhaltet, wobei der Rest aus zumindest einem ausgewählt aus Martensit, Bainit und Perlit besteht, wobei das polygonale Ferrit eine durchschnittliche Korngröße von 5 $\mu$m oder mehr und ein Seitenverhältnis von 1,40 oder weniger aufweist.

2. Hochfestes, elektrisch widerstandsgeschweißtes Stahlrohr gemäß Anspruch 1, wobei die Zusammensetzung, auf einer Massen%-Basis, zumindest eines ausgewählt aus Mo: 0,05% bis 0,5%, Cu: 0,05% bis 0,5%, Ni: 0,05% bis 1,0% und Co: 0,05% bis 1,0% beinhaltet.

3. Hochfestes, elektrisch widerstandsgeschweißtes Stahlrohr gemäß Anspruch 1 oder 2, wobei die Zusammensetzung, auf einer Massen%-Basis, zumindest eines ausgewählt aus Nb: 0,01% oder mehr und 0,10% oder weniger und V: 0,01% oder mehr und 0,10% oder weniger beinhaltet.

4. Hochfestes, elektrisch widerstandsgeschweißtes Stahlrohr gemäß einem der Ansprüche 1 bis 3, wobei die Zusammensetzung, auf einer Massen%-Basis, Ca: 0,0005% bis 0,0050% beinhaltet.

5. Verfahren zur Herstellung des hochfesten, elektrisch widerstandsgeschweißtes Stahlrohrs gemäß einem der Ansprüche 1 bis 4, wobei das Verfahren umfasst:

   einen Rohrmaterial-Produktionsschritt des Aufheizens, Warmwalzens und anschließend Kühlens eines Stahlmaterials um ein warmgewalztes Stahlband zu erhalten und Aufwickeln des warmgewalzten Stahlbands;
   einen Rohrherstellungsschritt des Formens des warmgewalzten Stahlbands in ein offenes Rohr, das einen im Wesentlichen kreisförmigen Abschnitt aufweist, anschließend Zusammenstoßen von Endflächen des offenen Rohrs in einer Breitenrichtung gegeneinander, Aufheizen der Endflächen des offenen Rohrs in der Breitenrichtung auf eine Temperatur höher als oder gleich dem Schmelzpunkt hiervon, und Durchführen von Pressschweißen an den zusammengestoßenen und aufgeheizten Endflächen des offenen Rohrs in der Breitenrichtung um ein elektrisch widerstandsgeschweißtes Stahlrohr zu erhalten; und
   einen Inline-Wärmebehandlungsschritt des Wärmebehandelns eines elektrisch widerstandsgeschweißten Teils des elektrisch widerstandsgeschweißten Stahlrohrs in einer Inline-Art,
   wobei das Aufheizen in dem Rohrmaterial-Produktionsschritt bei einer Heiztemperatur von 1100°C bis 1250°C durchgeführt wird,
   das Kühlen nach dem Warmwalzen in dem Rohrmaterial-Produktionsschritt kontinuierlich auf eine Kühlstopptemperatur von 600°C bis 450°C durchgeführt wird, während das Kühlen derart gesteuert wird, dass, an einer zentralen Position des Stahlbands in einer Dickenrichtung, eine Temperatur $T_{20}$ nach 20 Sekunden ab einer Zeit $t_0$, bei welcher ein letzter Stich des Warmwalzens beendet wird, höher als 650°C ist und eine Temperatur $T_{80}$ nach 80 Sekunden ab einer Zeit $t_0$ niedriger als 650°C ist, und
   die Wärmebehandlung in dem Inline-Wärmebehandlungsschritt das Aufheizen des elektrisch widerstandsgeschweißten Teils derart, dass ein Minimaltemperaturabschnitt des elektrisch widerstandsgeschweißten Teils in einer Dickenrichtung eine Temperatur von 800°C oder höher aufweist und eine maximale Heiztemperatur 1150°C oder niedriger beträgt und anschließend Durchführen von Wasserkühlen oder Gestatten des Abkühlens des elektrisch widerstandsgeschweißten Teil derart, dass eine maximale Temperatur des elektrisch widerstandsgeschweißten Teils in der Dickenrichtung 500°C oder niedriger beträgt, beinhaltet.

6. Verfahren zur Herstellung des hochfesten, elektrisch widerstandsgeschweißtes Stahlrohrs gemäß Anspruch 5, wobei in dem Rohrherstellungsschritt das warmgewalzte Stahlband abgewickelt und kontinuierlich unter Verwendung einer Mehrzahl von Rollen geformt wird, um ein offenes Rohr, das einen im Wesentlichen kreisförmigen Abschnitt aufweist, zu erhalten, anschließend Endflächen des offenen Rohres in einer Breitenrichtung gegeneinander gestoßen und auf eine Temperatur höher als oder gleich dem Schmelzpunkt hiervon aufgeheizt werden, und Pressschweißen an den zusammengestoßenen und geschweißten Endflächen des offenen Rohrs in der Breitenrichtung durchgeführt wird um ein elektrisch widerstandsgeschweißtes Stahlrohr zu erhalten.

**Revendications**

1. Tuyau en acier soudé par résistance électrique à haute résistance comprenant :

   une composition contenant, sur une base en % en masse, C : 0,04 % à 0,15 %, Si : 0,10 % à 0,50 %, Mn : 1,0 % à 2,2 %, P : 0,050 % ou moins, S : 0,005 % ou moins, Cr : 0,2 % à 1,0 %, Ti : 0,005 % à 0,030 %, et Al : 0,010 % à 0,050 %, N : 0,005 % ou moins, O : 0,005 % ou moins, facultativement au moins un choisi parmi Mo : 0,5 % ou moins, Cu : 0,5 % ou moins, Ni : 1,0 % ou moins, et Co : 1,0 % ou moins, facultativement au moins un choisi parmi Nb : 0,10 % ou moins et V : 0,10 % ou moins, facultativement Ca : 0,0005 % à 0,0050 %, le reste étant Fe et des impuretés inévitables ; et
   une microstructure incluant de la ferrite polygonale avec une fraction en volume de 70 % ou plus et de l'austénite résiduelle avec une fraction en volume de 3 % à 20 %, le reste étant au moins une choisie parmi la martensite, la bainite et la perlite, la ferrite polygonale ayant une taille moyenne de grains de 5 $\mu$m ou plus et un rapport d'aspect de 1,40 ou moins.

2. Tuyau en acier soudé par résistance électrique à haute résistance selon la revendication 1, dans lequel la composition contient, sur une base en % en masse, au moins un choisi parmi Mo : 0,05 à 0,5 %, Cu : 0,05 % à 0,5 %, Ni : 0,05 % à 1,0 %, et Co : 0,05 % à 1,0 %.

3. Tuyau en acier soudé par résistance électrique à haute résistance selon la revendication 1 ou 2, dans lequel la composition contient, sur une base en % en masse, au moins un choisi parmi Nb : 0,01 % ou plus et 0,10 % ou moins et V : 0,01 % ou plus et 0,10 % ou moins.

4. Tuyau en acier soudé par résistance électrique à haute résistance selon l'une quelconque des revendications 1 à 3, dans lequel la composition contient Ca : 0,0005 % à 0,0050 % sur une base en % en masse.

5. Procédé de production du tuyau en acier soudé par résistance électrique à haute résistance selon l'une quelconque des revendications 1 à 4, le procédé comprenant
   une étape de production de matériau de tuyau consistant à chauffer, laminer à chaud, puis refroidir un matériau en acier pour obtenir une bande en acier laminé à chaud et enrouler la bande en acier laminé à chaud ;
   une étape de fabrication de tuyau consistant à former la bande en acier laminé à chaud en un tuyau ouvert ayant une section sensiblement circulaire, puis abouter des surfaces d'extrémité du tuyau ouvert dans une direction de largeur les unes contre les autres, chauffer les surfaces d'extrémité du tuyau ouvert dans la direction de largeur à une température supérieure ou égale au point de fusion de celles-ci et effectuer une soudure par pression sur les surfaces d'extrémité aboutées et chauffées du tuyau ouvert dans la direction de largeur pour obtenir un tuyau en acier soudé par résistance électrique ; et
   une étape de traitement thermique en ligne consistant à traiter thermiquement une partie soudée par résistance électrique du tuyau en acier soudé par résistance électrique d'une manière en ligne,
   dans lequel le chauffage dans l'étape de production de matériau de tuyau est effectué à une température de chauffage de 1100 °C à 1 250 °C,
   le refroidissement après le laminage à chaud dans l'étape de production de matériau de tuyau est effectué en continu jusqu'à une température d'arrêt de refroidissement de 600 °C à 450 °C alors que le refroidissement est commandé de sorte qu'au niveau d'une position centrale de la bande en acier dans une direction d'épaisseur, une température $T_{20}$ après 20 secondes à partir d'un temps $t_0$ auquel un passage final du laminage à chaud est fini soit supérieure à 650 °C et une température $T_{80}$ après 80 secondes à partir du temps $t_0$ soit inférieure à 650 °C, et
   le traitement thermique dans l'étape de traitement thermique en ligne inclut le chauffage de la partie soudée par résistance électrique de sorte qu'une partie de température minimale de la partie soudée par résistance électrique dans une direction d'épaisseur ait une température de 800 °C ou plus et qu'une température de chauffage maximale soit de 1 150 °C ou moins, puis la réalisation d'un refroidissement à l'eau ou l'autorisation pour la partie soudée par résistance électrique de refroidir de sorte qu'une température maximale de la partie soudée par résistance électrique dans une direction d'épaisseur soit de 500 °C ou moins.

6. Procédé de production d'un tuyau en acier soudé par résistance électrique à haute résistance selon la revendication 5, dans lequel dans l'étape de fabrication de tuyau, la bande en acier laminé à chaud est déroulée et formée continuellement à l'aide d'une pluralité de cylindres pour obtenir un tuyau ouvert ayant une section sensiblement circulaire, puis des surfaces d'extrémité du tuyau ouvert dans une direction de largeur sont aboutées les unes contre les autres et chauffées à une température supérieure ou égale au point de fusion de celles-ci, et un soudage par pression est effectué sur les surfaces d'extrémité aboutées et soudées du tuyau ouvert dans la direction de largeur pour obtenir un tuyau en acier soudé par résistance électrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3749704 B
- EP 2752499 A1